# EUROPEAN PATENT APPLICATION

(11) **EP 4 737 641 A1**
(43) Date of publication of application: **06.05.2026**
(21) Application number: 25189886.2
(22) Date of filing: 16.07.2025
(51) Int. Cl.: D21H 17/06, B65D 65/42, D21H 21/14, D21H 21/24, D21H 27/00, D21H 27/10

(54) **COATED PAPER LINER**

(30) Priority: 31.10.2024 EP 24383198
(71) Applicant: Industrias de Transformacion de Andoain, S.A.U, 20140 Andoain (ES)
(72) Inventor: Valera, Natacha, 20140 ANDOAIN (ES); Rodiño Lopez, José Antonio, 20140 ANDOAIN (ES); Urquiola Zaballa, Francisco Borja, 20140 ANDOAIN (ES); Canales Perez, Jorge, 20140 ANDOAIN (ES)
(74) Representative: Plasseraud IP

(57) **Abstract**

A coated paper liner serves as both exterior packaging and an interior release liner for consumer products. The liner comprises a paper sheet layer with a first polymeric composition, such as a thermoplastic elastomer or polymer, forming a film on at least a portion of a surface of the paper sheet. The liner may also comprise a flexibility agent that enhances pliability and noise reduction during handling. The liner may include a release agent, like silicone, to prevent adhesion of consumer products to the liner. The method of manufacturing involves coating the paper sheet with the polymeric composition and flexibility agent, followed by drying. This solution offers a sustainable alternative to plastic films, providing to the liner heat-sealability, barrier properties, and recyclability.

## Description

### Technical Field

This disclosure pertains to the field of flexible packaging for consumer products.

### Background Art

Individually packaged consumer products are generally wrapped in a protective pouch, bag, envelopes, or the like which may be heat-sealed to enclose and protect the product from external elements such as dirt, moisture, oil, oxygen, or other airborne contaminants. Plastic films have been previously used for such packaging, however, reliance on plastic materials poses environmental concerns, as they generate waste that is difficult to manage and recycle.

Additionally, packaging of certain consumer products poses the additional challenge of preventing unintended adhesion or material transfer between the consumer product and the interior of the packaging. In addition, some products are sensitive to humidity, oxygen grease that may penetrate the package and deteriorate the packaged product. Previous attempts to prevent these issues included the use of an intermediate release liner to act as a barrier between the packaging and the product. The addition of a release liner complicates the manufacturing process, increases costs, and increases the amount of waste produced.

For cost reduction, packaging simplification, and environmental sustainability, packaging and release liners may be formed as a single packaging solution, eliminating the need for separate release liners and packaging. Previous attempts to produce packaging-release liner combinations have been formed of silicone-coated plastic films. Such films provide sufficient heat-sealability and flexibility, however, they produce solid waste which may not be recyclable. The production and disposal of plastic films have a significant carbon footprint, which further exacerbates environmental issues.

There exists a need for a more environmentally sustainable packaging which eliminates the need for plastic film while maintaining proper heat-sealability, barrier properties, and flexibility, and in some instances, product releasability.

### Summary

Accordingly, this invention presents a coated paper liner and manufacturing method thereof that addresses the aforementioned challenges. The coated paper liner can be formed into a container, such as a pouch, bag, or envelope, and may serve as both exterior packaging and an interior release liner for consumer products. By coating at least a portion of the paper with a first polymeric composition, a flexibility agent, and optionally, a release agent, or with a first polymeric composition, and one or more of a release agent and a flexibility agent, the solution provides a sustainable alternative to traditional plastic films. This approach not only reduces solid waste but also enhances recyclability, offering a more environmentally friendly packaging solution.

In general, the invention is carried out by coating at least a portion of a paper sheet with one or more coatings comprising independently a first polymeric composition, and one or more of a release agent and a flexibility agent, or with a first polymeric composition, and optionally, a release agent and a flexibility agent.

### Brief Description of Drawings

Fig. 1 is a schematic of an example coated paper liner according to the present invention.
Fig. 2 is a schematic of an example coated paper liner according to the present invention.
Fig. 3 is a schematic of an example coated paper pouch according to the present invention.
Fig. 4 is a schematic of an example coated paper bag according to the present invention.
Fig. 5A-D are schematics of example methods of manufacturing a coated paper liner according to the present invention.

### Description of Embodiments

This description and the accompanying drawings describe different embodiments encompassed by the claims for illustration purposes and should not be taken as limiting, with the claims defining the scope of the present invention. Various mechanical, compositional, structural, and operational changes may be made without departing from the scope of this description and the claims. In some instances, structures and techniques well-known in the field of the invention have not been shown or described in detail so as not to obscure the description. Like numbers in two or more figures represent the same or similar elements. Furthermore, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment. Moreover, the depictions herein are for illustrative purposes only and do not necessarily reflect the actual shape, size, or dimensions of the system or illustrated components.

It is noted that, as used in this specification and the appended claims, the singular forms "a," "an," and "the," and any singular use of any word, include plural referents unless expressly and unequivocally limited to one referent. As used herein, the term "include" and its grammatical variants are intended to be non-limiting, such that recitation of items in a list is not to the exclusion of other like items that can be substituted or added to the listed items.

When a layer is being described as "on" or "over" another layer, it is to be understood that the layers can either be directly contacting each other or have another intervening layer therebetween, unless expressly stated to the contrary. The terms are thus simply describing the relative position of the layers to each other and do not necessarily mean "on top of" since the relative position above or below depends on the orientation of the viewer.

As used herein, "first", "second", and "third" may be used interchangeably to distinguish one component from another and are not intended to signify location or important of the individual components. Except as otherwise noted, the dimensions and values disclosed herein are not to be understood as being strictly limited to the exact numerical values recited. Instead, unless otherwise specified, such value is intended to mean both the recited value and a functionally equivalent range surrounding that value. For instance, whether the word "about" or "approximately" are present or not, the values as presented may be rounded up to the next lower or higher decimal value. For example, 40.15 mm is intended to mean strictly 40.15 mm or "about 40.15 mm", meaning that the value may vary from 40.10 mm to 40.20 mm. Similarly, 0.122 is intended to mean strictly 0.122 mm or "about 0.122 mm", which may comprise from 0.120 mm to 0.130 mm. The materials, methods, and examples described herein are illustrative

The coated paper liner and any subsequent packaging made therefrom comprise a first layer comprising a paper sheet layer and a first coating comprising a first polymeric composition selected from the group consisting of thermoplastic elastomer, thermoplastic polymer, or a combination thereof forming a film on at least a portion of a surface of the paper sheet layer, wherein the coated paper liner further comprises a flexibility agent. The coated paper liner and any subsequent packaging made therefrom comprise a first layer comprising a paper sheet layer and a first coating comprising a first polymeric composition selected from the group consisting of thermoplastic elastomer, thermoplastic polymer, or a combination thereof forming a film on a at least a portion of a surface of the paper sheet layer, wherein the coated paper liner comprises one or more additional component, being said one or more additional component selected from the group consisting of a flexibility agent and a release agent.

In some embodiments, said one or more additional component is the flexibility agent and the paper liner comprises a flexibility agent.

In some embodiments, the coated paper liner and any subsequent packaging made therefrom comprise a first layer comprising a paper sheet layer and a first coating comprising a first polymeric composition selected from the group consisting of thermoplastic elastomer, thermoplastic polymer, or a combination thereof forming a film on at least a portion of a surface of the paper sheet layer, wherein the coated paper liner comprises a flexibility agent and wherein the paper liner does not comprise a release agent.

In some embodiments, the first coating may comprise a mixed coating of the first polymeric composition and the flexibility agent.

In some embodiments, the paper sheet layer comprises the flexibility agent.

In some embodiments, said one or more additional component is the release agent and the paper liner comprises a release agent.

In some embodiments, the coated paper liner and any subsequent packaging made therefrom comprise a first layer comprising a paper sheet layer and a first coating comprising a first polymeric composition selected from the group consisting of thermoplastic elastomer, thermoplastic polymer, or a combination thereof forming a film on a at least a portion of a surface of the paper sheet layer, wherein the coated paper liner comprises a release agent and wherein the paper liner does not comprise a flexibility agent.

In some embodiments, the first coating may comprise a mixed coating of the first polymeric composition and the release agent.

In some embodiments, the paper liner may also include a second coating of a release agent forming a film on at least a portion of a surface of the paper sheet layer.

In some embodiments, the paper liner further may comprise both a flexibility agent and a release agent.

In some embodiments the first coating may comprise a mixed coating of the first polymeric composition, the release agent and the flexibility agent.

In some embodiments, the paper liner may include a first coating comprising a mixed coating of the first polymeric composition and the flexibility agent, and may also include a second coating of a release agent forming a film on at least a portion of a surface of the paper sheet layer.

In some embodiments, the paper liner may include a paper sheet layer comprising the flexibility agent, the first coating comprising the first polymeric composition, and a second coating of a release agent forming a film on at least a portion of a surface of the paper sheet layer.

In some embodiments, the paper liner may include a paper sheet layer comprising the flexibility agent and the first coating comprising a mixed coating of the first polymeric composition and the release agent.

The first polymeric composition in some embodiments may act as a heat-sealing layer. Heat-sealing should be understood to refer to a material which forms a bond when subjected to heat and pressure. Such compositions melt and flow upon heating, creating a seal that is both strong and durable. In the context of packaging, the first polymeric composition acting as a heat-sealing layer may provide the necessary adhesion so as to form paper liners that securely enclose products, while also offering barrier properties against moisture, vapor, oxygen and oils.

A flexibility agent should be understood to refer a material which imparts increased flexibility to the material onto which it is applied. This results in decreased noise generation by the material and reduced risk of tear or rupture. In the context of the paper liner and any subsequent packaging made therefrom, flexibility agents may be those which are absorbed by the paper sheet, altering the texture to increase the paper sheet's flexibility when bent or moved. Flexibility refers to the ability of a material to bend or deform without breaking. In the context of the patent application, it relates to the capacity of the coated paper liner to adapt to various shapes and movements without tearing, enhancing the durability and usability of any subsequent packaging made therefrom. Flexibility is crucial for ensuring that the liner can securely enclose products while allowing ease of handling and reducing noise.

The use of a paper sheet layer as the first layer for the paper liner offers an environmentally sustainable alternative to traditional plastic films. By replacing plastic with paper, the invention reduces solid waste and enhances recyclability, addressing environmental concerns associated with conventional packaging solutions.

The paper sheet layer may comprise a mixture selected from the group consisting of pulp, pre and/or post-consumer recycled fibers, or combinations thereof. Pulp refers to a fibrous material derived from wood, non-wood origin, or obtained from recycled paper, used as the primary raw material in papermaking. It can be produced through mechanical, chemical, or semi-chemical processes, resulting in different types such as mechanical pulp, chemical pulp (e.g., kraft or sulfite), and bleached or unbleached variants. Pulp serves as the base for forming paper sheets, providing the necessary fibers for strength and flexibility in the final product. Recycled fibers should be understood to be fibers that have been previously used in products and then recovered and processed for reuse in new products. These fibers can come from pre-consumer sources, wherein fibers are generated after manufacturing of a fiber good is complete but before the product reaches an end-use consumer, such as manufacturing waste; or post-consumer sources, such as used paper products which have been discarded and recycled. Recycled fibers generally exhibit lower mechanical strength and brightness compared to pure virgin fibers, but their use contributes to environmental sustainability by reducing waste and the need for virgin raw materials.

Examples of pulp which may be used to form the paper sheet layer include wood pulp, said wood pulp preferably comprising hardwood and softwood pulp; non-wood pulp, said non-wood pulp preferably comprising fibers selected from the group consisting of bamboo, hemp, straw, or agricultural residue; and combinations thereof. Hardwood refers to wood derived from angiosperm trees, which are typically broad-leaved and often deciduous. These trees, such as oak, maple, and eucalyptus, have a denser and more complex structure compared to softwoods, making them suitable for applications requiring durability and strength. In the context of papermaking, hardwood pulp is often used to provide specific qualities like smoothness and printability to the paper. Softwood refers to wood derived from coniferous trees, which are typically evergreen and have needle-like leaves. These trees, such as pine, spruce, and fir, produce wood that is generally lighter and less dense than hardwoods, making it easier to work with and often used in applications like construction, paper production, and furniture. In papermaking, softwood pulp is valued for its long fibers, which contribute to the strength and durability of the paper.

Pulp used to form the paper sheet may be selected from the group consisting of mechanical pulp, chemical pulp such as sulphate or sulfite pulp, bleached chemi-thermomechanical pulp (BCTMP), unbleached pulp, half-bleached pulp, and a mixture thereof. In some embodiments, a mixture of eucalyptus hardwood and northern bleached kraft softwood is used. In other embodiments, other mixtures of the above materials are used. The paper sheet layer prior to forming the coated paper liner may have a grammage of from 10 to 120 g/m², preferably from 15 to 100 g/m², more preferably from 20 to 90 g/m².

Utilizing a paper sheet layer composed of a mixture of hardwood and softwood pulp, non-wood pulp, or recycled fibers provides a versatile and sustainable base material for the coated paper liner. This composition enhances the environmental sustainability of the product by reducing reliance on non-renewable resources and promoting recyclability. The inclusion of materials such as bamboo, hemp, straw, or agricultural residue further diversifies the sources of raw materials, potentially lowering the carbon footprint associated with production.

The combination of different pulp types, including wood pulp, said wood pulp preferably comprising hardwood and softwood pulp, more preferably eucalyptus hardwood and northern bleached kraft softwood; non-wood pulp, said non-wood pulp preferably comprising fibers selected from the group consisting of bamboo, hemp, straw, or agricultural residue; and combinations thereof, allows for control of the paper's mechanical properties, such as strength and flexibility. This tailored composition ensures that the paper sheet layer can withstand the coating processes and maintain its integrity during use, providing a reliable substrate for the first polymeric composition and flexibility agent.

By specifying a grammage range, the invention ensures that the paper substrate maintains a controlled balance between strength and flexibility. This range allows the paper to withstand the coating processes without compromising its structural integrity, ensuring that the final product can effectively serve as both a paper liner and packaging. The invention may achieve the following mechanical properties of the paper sheet due at least in part to the specified grammage above. Tensile strength (according to ISO 1924/3) is equal to or greater than 0.5 kN/m in the machine direction (MD) and equal to or greater than 0.3 kN/M in the cross direction (CD), preferably equal to or greater than 1.5 kN/M MD equal to or greater than 0.8 kN/M CD. Tear strength (according to ISO 1974) is equal to or greater than 1.8 mN.m²/g MD and equal to or greater than 2 mN.m²/g CD, preferably equal to or greater than 3.8 mN.m²/g MD and equal to or greater than 4 mN.m²/g CD. Burst strength (according to ISO 2758) is equal to or greater than 1.5 kPa.m²/g, preferably equal to or greater than 2 kPa.m²/g.

The specified grammage also contributes to the overall sustainability of the product by minimizing material usage while maintaining necessary performance characteristics. This range allows the paper sheet to maintain sufficient pliability to be easily employed in consumer product packaging while reducing the risk of tearing, puncturing, or exposure of said consumer product to outside elements such as moisture, oils, and particulate. By maintaining the specified grammage, the paper sheet can withstand the processing requirements of forming the paper liner, ensuring necessary performance characteristics while minimizing unnecessary material consumption.

In some embodiments, the paper sheet may be pre-printed to comprise text and/or images. In other embodiments, the paper sheet may be printable such that printing may occur after completion of the coated paper liner. Alternatively, in other embodiments the paper sheet may be print-free.

Pre-printing the paper sheet may eliminate the need for additional labeling steps post-formation, which may reduce the manufacturing process and production costs. Additionally, the pre-printed information may be protected by subsequent coating steps, which can maintain legibility and aesthetic quality.

Ensuring the paper sheet is printable subsequent to the paper liner formation allows for flexibility in the manufacturing process and may allow a single process to produce paper liners for a number of distinct consumer products.

Both printing methods (printing prior to coating, printing subsequent to drying) can contribute to a more professional and visually appealing product, which can enhance brand perception and consumer trust. The protected printed content can reduce or prevent distortion of any legal text, branding, and other important information. This is relevant for regulatory compliance and effective communication with consumers.

The arrangement of the first coating comprising a first polymeric composition forming a film on at least a portion of a surface of the paper sheet provides a film that enables the formation of a strong and durable bond when subjected to heat and pressure. This configuration allows the coated paper liner to securely enclose products, offering barrier properties against moisture, vapor, oxygen, and oils, which are essential for maintaining the integrity of packaged consumer products.

In some embodiments, the first coating is coated on an entire surface of the paper sheet. In other embodiments, the first coating is coated on only a portion of a surface of the paper sheet. In such embodiments, the first coating may be coated in a single or plurality of discrete or connected regions wherein the coating may be in a random configuration or in a pattern, for example stripes or repeating dots, on a surface of the paper sheet. This ensures designated regions for heat-sealing the paper liner while reducing unnecessary material costs.

The first polymeric composition is selected from the group consisting of thermoplastic elastomer, a thermoplastic polymer, or combinations thereof. A thermoplastic elastomer (TPE) is a type of polymer that combines the elastic properties of rubber with the processability of thermoplastics. TPEs can be repeatedly melted and reshaped, making them versatile for various applications. They provide flexibility, durability, and resistance to environmental factors, making them suitable for use in heat-sealable compositions in packaging solutions. A thermoplastic polymer is a type of polymer that becomes pliable or moldable at a certain elevated temperature and solidifies upon cooling. These polymers can be repeatedly melted and reshaped without significant chemical change, making them highly versatile for various applications. In the context of packaging, thermoplastic polymers are often used in first polymeric compositions due to their ability to form strong, durable bonds when subjected to heat and pressure. In some embodiments, the thermoplastic polymer may be polyethylene.

In some embodiments, the first polymeric composition may be a dispersion of one or more thermoplastic elastomers. Preferably, the one or more thermoplastic elastomer dispersions may be selected from the group consisting of ethylene C₁₋₆ alkyl acrylate copolymers, ethylene C₁₋₆ alkyl acrylic acid copolymers, vinyl acetate-ethylene copolymer, ethylene vinyl acetate, polyvinyl acetate copolymers, and combinations thereof. Preferably, the ethylene C₁₋₆ alkyl acrylate copolymers may be ethylene ethyl acrylate copolymers or ethylene butyl acrylate copolymers. Preferably, the ethylene C₁₋₆ alkyl acrylic acid copolymers may be ethylene ethyl acrylic acid copolymers or ethylene butyl acrylic acid copolymers. More preferably, the thermoplastic elastomer dispersion is a blend of ethylene vinyl acetate and ethylene ethyl acrylate copolymer.

This material selection allows the paper liner to form strong and reliable seals when subjected to heat and pressure, which is crucial for maintaining the integrity of the packaging. Thermoplastic elastomers, thermoplastic polymers, and combinations thereof, and preferably blends of ethylene vinyl acetate and ethylene ethyl acrylate copolymer, provide the necessary adhesion properties while also offering resistance to moisture, vapor, oxygen, and oils, ensuring the protection of the packaged product. Such thermoplastic elastomers also ensure ease of use, allowing the consumer to separate the liner without risk of damaging the package therein.

The inclusion of thermoplastic elastomers in the first polymeric composition allows for a balance between adhesion and flexibility, which is especially of relevance in packaging which acts with the dual function of both packaging and a release liner. This configuration supports the creation of a single packaging solution that eliminates the need for separate components, thereby simplifying the packaging process and reducing material usage.

A coating weight of the first polymeric composition may be from 0.05 to 9.0 g/m² after drying. For example, depending on the composition of the first coating, the coating weight of the first polymeric composition may be from 0.15 to 8.5 g/m², from 0.20 to 8.0 g/m², from 0.25 to 7.5 g/m², from 0.35 to 5.5 g/m², from 0.40 to 5.5 g/m², or from 1 to 8.5 g/m², from 2.5 to 6.5 g/m², after drying. By specifying the coating weight of the first polymeric composition, the invention ensures that the paper liner can maintain an effective heat seal strength and barrier properties without unnecessarily increasing material cost or product thickness. The specified coating weight contributes to the overall functionality and user experience of the product by ensuring that the liner can be used discreetly and effectively.

In some embodiments, the coated paper liner further comprises the flexibility agent. Incorporating the flexibility agent into the paper liner enhances the flexibility and absorption properties of the paper sheet in order to reduce the risk of rupture or tear and decrease noise generation during handling. Noise reduction when the paper is moved or bent improves the user experience by minimizing the sound typically associated with handling packaging materials. This may be beneficial in ensuring discreet use of consumer products. The flexibility agent may be at least partially absorbed by the paper sheet, altering its texture and contributing to the overall functionality of the liner. Furthermore, by imparting flexibility, the flexibility agent improves the durability of the paper liner and any subsequent packaging made therefrom by allowing increased ease of movement, reducing the risk of damage, tearing, or puncturing of the paper liner.

In some embodiments, the flexibility agent may be mixed with the pulp when forming the paper sheet, may be applied to the paper sheet separately, or may be applied to the paper sheet as part of a mixture comprising the flexibility agent and the first polymeric composition. The flexibility agent may be at least partially absorbed into the paper sheet wherein some flexibility agent may remain partly on the surface of the paper and may also partly diffuse within the paper sheet fibers to impart flexibility. Such absorption may improve the noise reducing effects of the flexibility agent on the paper liner.

The flexibility agent contained within the paper liner may comprise a polyol. A polyol is a type of organic compound containing multiple hydroxyl groups (-OH) attached to its carbon atoms. Polyols are commonly used in various industrial applications, including as flexibility agents in coatings, due to their ability to enhance flexibility and absorption properties. Examples of polyols include glycerin, sorbitol, and propylene glycol, which can be absorbed by materials like paper to alter texture and reduce noise.

In some embodiments, the flexibility agent is selected from the group consisting of fatty acid esters, paraffin emulsions, quaternary ammonium salts, polyols, and combinations thereof. In preferred embodiments, the flexibility agent may be a polyol selected from the group consisting of glycerin, sorbitol, polyethylene glycol, C₁₋₆ alkene glycol, xylitol, and combination thereof. Preferably the C₁₋₆ alkene glycol is propylene glycol or butylene glycol. In more preferred embodiments, the polyol is glycerin.

Incorporating a polyol as the flexibility agent in the coated paper liner enhances the flexibility, absorption, and noise reducing properties of the paper sheet. Particularly, low molecular weight and non-volatile polyols as listed above soften polymeric materials like cellulose. This configuration reduces noise when the paper is moved or bent, improving the user experience by minimizing the sound typically associated with handling packaging materials. The polyol is absorbed by the paper sheet, altering its texture and contributing to the overall functionality of the liner. This absorption not only reduces noise but also imparts flexibility, improving the durability of the paper liner and any subsequent packaging made therefrom by allowing increased ease of movement, reducing the risk of damage, tearing, or puncturing of the liner.

A coating weight of the flexibility agent may be from 0.01 to 5.0 g/m², for example from 0.05 to 4.5 g/m², 0.15 to 3.7 g/m², 0.25 to 3.0 g/m², 0.5 to 2.5 g/m², 1.0 to 2.0 g/m², preferably from 0.15 to 2.8 g/m², more preferably from 0.6 to 1.5 g/m² after drying. By specifying a coating amount of the flexibility agent, the invention ensures that the paper liner is sufficiently flexible to impart desired pliability and noise reduction without interfering with the heat-sealing or barrier capabilities of the paper liner. The specified coating amount contributes to the overall functionality and use experience of the product by ensuring that the liner can be used discreetly and effectively.

In some embodiments, the first coating further comprises the flexibility agent. In embodiments wherein the first coating comprises the first polymeric composition and flexibility agent, an amount of the first coating is from 0.1 to 10 g per m² of the paper sheet, preferably from 2 to 7 g per m² of the paper sheet, more preferably from 3 to 5 g per m² of the paper sheet., after drying. The first coating comprising the polymeric composition and the flexibility agent will be hereinafter referred to as a first mixed coating. In embodiments wherein the first coating is the first mixed coating, a coating weight of the first mixed coating may be from 0.1 to 10.0 g/m², for example, from 0.15 to 9.5 g/m², 0.20 to 8.5 g/m², 0.30 to 8.0 g/m²,from 0.5 to 6.5 g/m², from 1.0 to 6.0 g/m², from 1.5 to 5.5 g/m², preferably from 2.0 to 7.0 g/m², more preferably from 3.0 to 5.0 g/m²of the paper sheet, after drying.

By specifying a combined coating amount of the first polymeric composition and flexibility agent (first mixed coating) from 0.1 to 10 g/m², preferably from 1 to 7 g/m², and more preferably from 2 to 5 g/m², the invention ensures that the paper sheet maintains an optimal balance between barrier properties, heat-sealability and flexibility. This range allows the paper to provide sufficient adhesion to form secure seals and prevent ingress of unwanted exterior elements such as dirt, oil, moisture or oxygen, while also minimizing noise and the risk of tearing during handling. The specified coating amount contributes to the overall functionality and user experience of the product by ensuring that the liner can be used discreetly and effectively.

A weight ratio of the first polymeric composition to the flexibility agent may be from 50:50 to 95:5, preferably from 60:40 to 90:10, more preferably approximately 85:15. A weight ratio of the first polymeric composition to the flexibility agent in the first mixed coating may be from 50:50 to 95:5, for example from 55:45, from 65:35, or from 75:35, preferably from 60:40 to 90:10, more preferably approximately 85:15.

By specifying a weight ratio of first polymeric composition to flexibility agent in the first mixed coating, the coated paper liner achieves a controlled balance between heat-sealability, barrier properties, and flexibility. This configuration ensures that the coated paper liner maintains strong adhesion properties necessary for secure packaging and prevents ingress of unwanted exterior elements such as dirt, oil, moisture or oxygen, while also providing sufficient flexibility to minimize noise and risk of tearing during handling. The higher proportion of first polymeric composition enhances the coated paper liner's ability to form durable seals, which is of relevance for maintaining the integrity of the packaged product.

In embodiments where the first coating comprises the polymeric composition and the flexibility agent, the first polymeric composition may be coated in an amount of from 0.05 to 9.0, preferably from 0.6 to 6.0, more preferably from 1.5 to 3.5 grams of first polymeric composition per m² of paper sheet, after drying, i.e. in the final liner. By specifying a coating amount of the first polymeric composition from 0.05 to 9.0, preferably from 0.6 to 6.0, more preferably from 1.5 to 3.5 g per m² of paper sheet, the paper liner can maintain an effective heat seal strength and barrier properties without unnecessarily increasing material cost or product thickness. The specified coating amount contributes to the overall functionality and user experience of the product by ensuring that the liner can be used discreetly and effectively.

In some embodiments, the coated paper liner further comprises a release agent. Inclusion of the release agent enhances the coated paper liner's ability to function as an interior release liner as well as an exterior packaging by providing an additional layer of protection and non-stick properties. The release agent ensures that the coated paper liner can effectively release adhesive surfaces without tearing or sticking, which is of relevance for maintaining the integrity of the packaged product. The release agent acts as a barrier, preventing unwanted adhesion and facilitating easy separation of the liner from the adhesive surface

In some embodiments, the first coating further comprises the release agent such that the first coating comprises the first polymeric composition and the release agent. The first coating comprising the polymeric composition and the release agent will be hereinafter referred to as a second mixed coating.

In embodiments wherein the first coating is the second mixed coating, the first polymeric composition and release agent are in a weight ratio from 30:70 and 95:5, for example from 35:65 to 85:15, or from 40:60 to 75:25, or from 50:50 to 65:45, preferably between 70:30 and 85:15. The coating weight of the second mixed coating may be from 0.1 to 10 g/m², for example from 0.15 to 8.5 g/m², from 0.3 to 7.5 g/m², from 2.5 to 6.5 g/m², or 4 to 6 g/m², preferably from 0,6 to 7 g/m², more preferably from 3 to 5 g/m² of the paper sheet, after drying.

In embodiments wherein the first coating is the second mixed coating, the first polymeric composition may be in an amount of 0.05 to 9.0 g/m², for example from 0.15 to 8.5 g/m², from 0.3 to 7.5 g/m², from 2.5 to 6.5 g/m², or 4 to 6 g/m², preferably from 0,6 to 7 g/m², more preferably from 3 to 5 g/m² of paper sheet, after drying, i.e. in the final liner. In this manner, the paper liner can maintain an effective heat seal strength and barrier properties without unnecessarily increasing material cost or product thickness. The specified coating amount contributes to the overall functionality and user experience of the product by ensuring that the liner can be used discreetly and effectively

In other embodiments, the first coating comprises the first polymeric composition, the release agent, and the flexibility agent. The first coating comprising the polymeric composition, the release agent, and the flexibility agent will be hereinafter referred to as a third mixed coating.

In some embodiments, the third mixed coating comprises the release agent in a weight% from 5 to 70wt%, preferably from 15 to 30wt%, the first polymeric composition is in a weight% from 30 to 95 wt%, preferably from 40 to 60 wt% and the flexibility agent is in a weight% from 5 to 50 wt%, preferably from 20 to 30 wt%, based on 100 weight parts of the third mixed coating, after drying.

The coating weight of the third mixed coating may be from 0.1 to 10 g/ m² of the paper sheet, for example from 0.15 to 8.5 g/m², from 0.3 to 7.5 g/m², from 2.5 to 6.5 g/m², or 4 to 6 g/m², preferably from 0,6 to 7 g/m², more preferably from 3 to 5 g/m², after drying.

In other embodiments, the release agent is applied to the coated paper liner in a second coating. In some embodiments, the second coating comprising a release agent may be applied to at least a portion of a surface of the paper sheet. The second coating may be coated directly on the first coating, may be coated on portions of the paper sheet on which the first coating is absent, or a combination of both. For example, the second coating may be applied in a single or plurality of discrete or connected regions wherein the coating may be in a random configuration or in a pattern. The second coating may comprise silicone. In some embodiments, the silicone is selected from the group consisting of addition-curing solventless silicone, addition-curing silicon emulsion, UV-cured silicone, and solvent-based silicone. Addition-curing solventless silicone refers to a composition comprising a silicone-based polymer, a catalyst, a crosslinker, and optionally a control release agent. Adding-curing solventless silicones may also comprise additives. Addition-curing silicon emulsion refers also to a composition comprising silicone-based polymer, a catalyst, a crosslinker, an anti-foam agent and water.

Examples of silicone-based polymers adequate for use in addition-curing solventless silicones for use in the paper liner herein disclosed may be, among others, DEHESIVE^{®} 906 AMA^{®}, DEHESIVE^{®} 919, DEHESIVE^{®} 920, DEHESIVE^{®} 981 AMA^{®} and DEHESIVE^{®} 929, all from WACKER,

Examples of catalysts adequate for use in addition-curing solventless silicones for use in the paper liner herein disclosed may be platinum based catalysts, among others CATALYST C 05 or CATALYST OL, both from WACKER.

Examples of crosslinkers adequate for use in addition-curing solventless silicones for use in the paper liner herein disclosed may be solvent-free hydrogen polysiloxanes containing reactive Si-H groups, among others, CROSSLINKER V-90, CROSSLINKER V-24 or CROSSLINKER V-88, all from WACKER

Examples of control release agents adequate for use in addition-curing solventless silicones for use in the paper liner herein disclosed may be, among others, CRA^{®} 17 or CRA^{®} 51 AMA^{®}, both from WACKER.

Examples of additives adequate for use in addition-curing solventless silicones for use in the paper liner herein disclosed may be, among others, ANCHORAGE ADDITIVE HF100 (epoxyfunctional silicone polymer) or ANCHORAGE ADDITIVE HF86, both from WACKER.

An example of silicone-based polymer provided in combination with a crosslinker, adequate for use in addition-curing silicone emulsions for use in the paper liner herein disclosed may be, among others, SILICONE EM922 from ELKEM

An example of catalysts adequate for use in addition-curing silicone emulsions for use in the paper liner herein disclosed may be, among others, CATALYST 909 PT from ELKEM.

An example of anti-foam agents adequate for use in addition-curing silicone emulsions for use in the paper liner herein disclosed may be, among others, ANTI FOAMER FC900 from ELKEM.

In particular, adequate examples of available silicones adequate for use according the present disclosure may be, among others, an addition-curing solventless silicone comprising Dehesive^{®} 906, CRA^{®} 17, Crosslinker V24, and catalyst C-05 all from Wacker^{®}, or an addition-curing silicone emulsion comprising SILICONE EM922, CROSSLKINKER emulsion & CATALYST 909 PT, and ANTIFOAMER FC900 from ELKEM.

In some embodiments, the second coating may be formed on the first polymeric composition. Inclusion of the second coating enhances the paper liner's ability to function as an interior release liner as well as an exterior packaging by providing an additional layer of protection and non-stick properties. This second coating ensures that the liner can effectively release adhesive surfaces without tearing or sticking, which is of relevance for maintaining the integrity of the packaged product. The second coating acts as a barrier, preventing unwanted adhesion and facilitating easy separation of the liner from the adhesive surface.

The arrangement of the second coating on the first polymeric composition, i.e. on the first coating, allows for a smooth and consistent application, which is of consequence for achieving uniform release properties across the coated paper liner. This configuration supports the dual function of the coated paper liner as both protective packaging and a release liner, simplifying the packaging process by eliminating the need for separate components.

In other embodiments, the second coating may be formed on portions of a surface of the paper sheet on which the first coating is absent or may be formed on portions of the surface of the paper sheet which include the first coating and portion in which the first coating is absent. This allows the release agent to act as a barrier between the consumer product and the coated paper liner to avoid undesired adhesion.

A coating weight of the second coating may be from 0.1 to 4 g/m², for example from 0.15 to 3.5 g/m², 0.2 to 3 g/m², 0.25 to 2.5 g/m², 0.35 to 2 g/m², preferably from 0.5 to 1.5 g/m² after drying. By applying the second coating in this controlled amount, the invention achieves a balance between providing sufficient release properties and maintaining the structural integrity of the coated paper liner. This configuration supports the dual function of the coated paper liner as both protective packaging and a release liner, simplifying the packaging process by eliminating the need for separate components.

In some embodiments, the release agent may comprise silicone. The silicone may be selected from the group consisting of addition-curing solventless silicone, addition-curing silicon emulsion, UV-cured silicone, and solvent-based silicone. By selecting silicone as the material for the release agent, the invention leverages the material's inherent properties, such as flexibility, non-stick properties, and resistance to moisture and oils, to enhance the liner's performance. This choice of material ensures that the coated paper liner can withstand various environmental conditions while maintaining its release capabilities, thereby improving the overall reliability and usability of the packaging solution.

For example, the silicone may be coated on the heat-sealable composition in an amount of from 0.1 to 4 g/m², preferably from 0.5 to 1.5 g/m² after drying, i.e. in the final liner. By applying the silicone in this controlled amount, the invention achieves a balance between providing sufficient release properties and maintaining the structural integrity of the liner. This configuration supports the dual function of the liner as both protective packaging and a release liner, simplifying the packaging process by eliminating the need for separate components.

By utilizing various types of silicone compositions, flexibility in the manufacturing process may be ensured. In some embodiments, when the paper liner is formed in a solvent-free processing environment, solventless silicone compositions may be used. In other embodiments, other forms of silicone can be used and tailored to specific production needs.

The resulting heat-sealing force of the coated paper liner may be configured depending on whether it is desirable that the liner is opened with breakage of the paper sheet layer or not. Thus, depending on the final application and desired opening properties of the coated paper liner, the resulting heat-sealing force of the coated paper liner may be equal or greater than 0.01N, for example equal or greater than 0.05N, 0.1N, 0.15N, 0.2N, 0.25N, 0.3N, 0.5N, 0.7N, 0.9N,1.0N, 1.2N, 1.5N, 1.7N, 2.2N, 2.7N, or 3.2N. In some embodiments, the resulting heat-sealing force is equal or lower than 10N, for example equal or lower than 8N, 7.5N, 6N, 5N, 4.5N, or 4N. In some applications the resulting heat-sealing force may be preferably greater than 0.05N, more preferably greater than 0.1N. The resulting heat-sealing force of the coated paper liner may be equal to or greater than 0.3N, preferably greater than 0.5N, more preferably greater than 0.7N. The heat-sealing force of the paper liner is determined by the following test: samples having dimensions of 5x 20cm are aligned with the longer side running in the machine direction, pairs of samples are stacked on top of each other with the sides to be heat-sealed facing inwards and heat-sealed lengthwise using a Yosan LM-260 laminator at 160 degrees C so that 15 cm are heat-sealed and 5 cm are not heat-sealed. The heat-sealed sample pair is then left to cool at room temperature for approximately 15 minutes. The heat-sealed sample pair is then cut to a strip width of 25 mm by cutting both sides using a strip cutter, then clamped into a Zwick universal tensile testing machine (for example a FRANK PTI tensile strength tester device) and pulled apart using the tensile testing machine as a peel test measured according to DIN-EN-ISO 1924-2. The maximum force in the measuring path, Fmax, is measured three times, calculated and displayed as an average value. The machine direction should be understood to refer to the direction in which the paper liner is pulled through the machine such that the longer edge of the paper extends parallel to the direction in which the paper moves during lamination.

This ensures that the coated paper liner forms a strong and reliable seal, which is of relevance for maintaining the integrity of the packaging. The specified sealing force provides sufficient adhesion to securely enclose products, preventing accidental opening and protecting the contents from external elements such as moisture and contaminants. This enhances the functionality of the paper liner, ensuring that consumer products remain secure and intact during storage and transport.

In some embodiments, the coated paper liner as described above is used to package consumer hygiene products such as sanitary napkins. The coated paper liner may also package other hygienic products such as cotton swabs, disposable cloths, toothbrushes, and adhesive or non-adhesive wound bandaging. In other embodiments, the coated paper may be used to package food products, toys, cosmetics, tooling items, or any other consumer good which requires packaging that provides oxygen, oil, moisture, and/or dirt barrier properties such as those provided by present coated paper liner.

In some embodiments, the coated paper liner is heat sealed so that a consumer product can be enclosed in a volume formed therein or surrounded by the paper liner. The heat seal may fully enclose the volume formed therein or at least partially enclose the volume formed therein. The paper liner may be heat sealed along an entire portion comprising the first coating or may be heat sealed along only a portion of the first coating.

The coated paper liner may be heat-sealed by folding at least a first portion of the coated paper liner comprising the first coating so that said first portion overlaps with a second portion of the coated paper liner also comprising the first coating to form an overlapping region and heat-sealing at least the overlapping region by applying heat and/or pressure. In such embodiments, the coated paper liner is heat-sealed to itself. In other embodiments, the coated paper liner may be heat-sealed to a separate component such as a plastic receptacle to form a closed container by overlapping a portion of the coated paper liner comprising the first coating with a portion of the separate component in an overlapping region and heat-sealing the overlapping region applying heat and/or pressure.

A consumer product may occupy the volume in the interior of the heat-sealed packaging as described above. In some embodiments, the consumer product occupies at least a portion of the volume such that a portion of the volume may not be occupied by the consumer product. In other embodiments, the consumer product occupies the entire volume of the closed container.

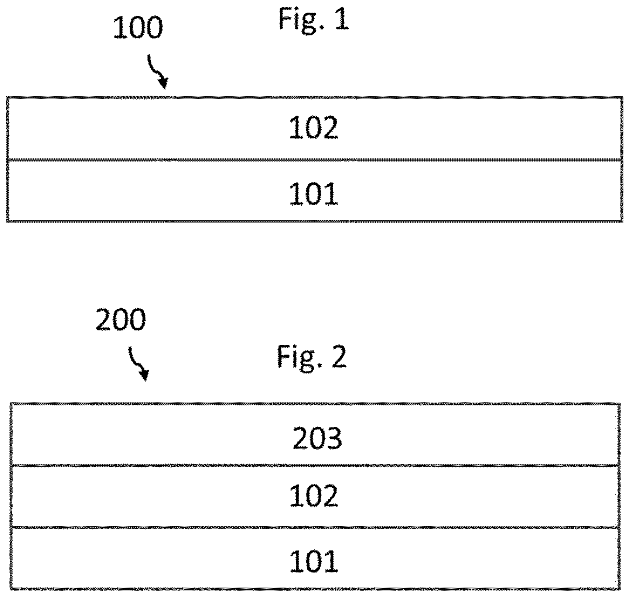

In one embodiment, illustrated by Fig. 1, a coated paper liner (100) comprises a first layer (101) comprising a paper sheet layer, and a first coating (102) comprising a first polymeric composition forming a film on a surface of the paper sheet layer.

The paper liner comprises a flexibility agent and/or a release agent (not shown). In some embodiments, as previously discussed, the flexibility agent may be mixed with the first polymeric composition to form a first mixed coating. In other embodiments, the release agent may be mixed with the first polymeric composition to form a second mixed coating. In still other embodiments, the flexibility agent and release agent may be mixed with the first polymeric composition to form a third mixed coating. In other embodiments, the paper sheet layer comprises the flexibility agent, for example, the flexibility agent may be mixed with pulp to form the paper sheet or may be applied to the paper sheet separately from the first polymeric composition. In Fig. 1, the first coating (102) may include any one of the first polymeric composition, the first mixed coating, the second mixed coating, or the third mixed coating as previously described.

In another embodiment, as illustrated by Fig. 2, the coated paper liner includes a first coating (102) which may include any one of the first polymeric composition or the first mixed coating, and further comprises a second coating (203) comprising the release agent forming a film on a surface of the paper sheet.

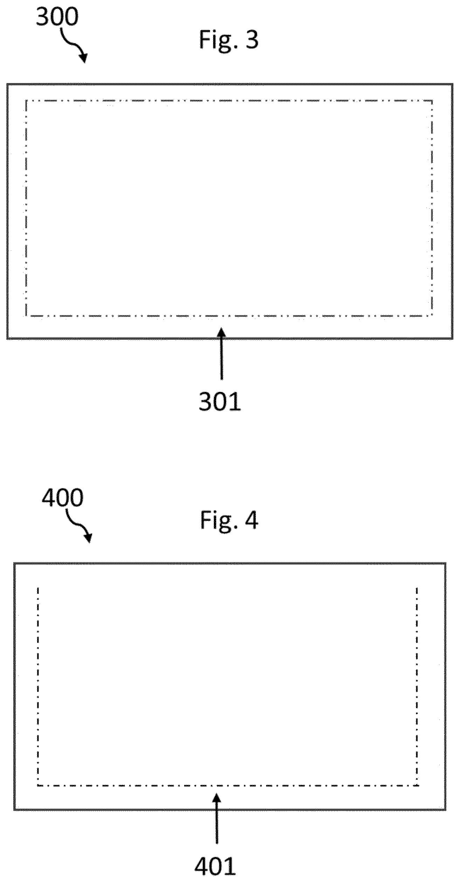

As presented in Fig. 3, the coated paper liner of any of the above description may be formed into a paper pouch (300) for wrapping a consumer product such as a sanitary napkin. The coated paper liner is folded, forming at least one overlapping region (301) wherein the overlapping region (301) is then heat sealed to form the pouch. Heat sealing may occur along the entire surface of the paper sheet which comprises the first coating or along only a portion of the surface of the paper sheet which comprises the first coating. In some embodiments, as shown in Fig. 3, the paper pouch (300) is heat sealed along an entire perimeter of the paper pouch (300) to seal a consumer product therein. In other embodiments (not shown), only a portion of the overlapping region is heat sealed to form a semi-open pouch. When the heat seal strength is within the range laid out above, the paper pouch (300) is ensured secure attachment to protect the consumer product therein while also allowing a user to release the paper pouch (300) when force is applied to utilize the consumer product. The paper pouch (300) also acts as the release liner easily separating from the adhesive applied on at least part of the consumer product.

By forming a coated paper pouch, or other disclosed packaging, using the coated paper liner, the invention provides a dual-function packaging solution that serves both as a protective packaging and a release liner. This integration eliminates the need for separate components, simplifying the packaging process and reducing material usage. The coated paper liner ensures secure attachment to protect the consumer product while allowing easy release when needed, enhancing user convenience.

The overlapping region of the paper pouch, which is heat-sealed, ensures a strong and reliable seal, maintaining the integrity of the packaging. This configuration prevents accidental opening and protects the contents from external elements such as moisture and contaminants, ensuring that consumer products remain secure and intact during storage and transport.

Utilizing the coated paper liner as a paper pouch or other disclosed packaging also leverages the liner's environmentally sustainable properties, as it replaces traditional plastic films with a recyclable paper-based solution. This approach addresses environmental concerns associated with conventional packaging solutions by reducing solid waste and enhancing recyclability.

As presented in Fig. 4, the coated paper liner of any of the above description may be formed into a bag (400) for containing any consumer products containing small pieces or small items, for food products such as cookies or biscuits, bath products such as soap tablets, soap pouches, bath salts, cotton pads, cotton swabs (Q-tips), toys construction pieces, detergent pouches, detergent tablets, among others. The paper liner is folded about itself to form the bag (401), heat-sealed on at least a portion of a perimeter thereof and filled with the desired food product. Heat sealing may occur along the entire surface of the paper sheet which comprises the first coating or along only a portion of the surface of the paper sheet which comprises the first coating. The coated paper liner then may be heat-sealed along all remaining perimeter portions or may include additional or alternative closure features such as an adhesive or releasable mechanism (not-shown).

By forming a coated paper bag using the coated paper liner, the invention provides an environmentally sustainable packaging solution that serves as a protective packaging with desired barrier properties and prevents unwanted adherence of the food product to the internal walls of the packaging. By using at least the first polymeric composition and optionally the release agent, or at least the first polymeric composition and one or more of the flexibility agent and release agent, the coated paper bag can prevent oils from the food product from being absorbed by the paper bag or the food product from sticking to the paper bag itself. This can ensure maintained structural integrity of the paper bag and improve user satisfaction. The paper bag can also prevent ingress of moisture, oxygen, dirt, or oil which would otherwise negatively impact the food product contained therein. This integration eliminates the need for any additional components, such as interior plastic bags, simplifying the packaging process and reducing material usage.

The overlapping region of the paper bag, which is heat-sealed, ensures a strong and reliable seal, maintaining the integrity of the packaging and prevents ingress of unwanted contaminants. This configuration prevents accidental opening and protects the contents from external elements such as moisture and oxygen which would otherwise damage the food product contained therein, ensuring that consumer products remain secure and intact during storage and transport.

Utilizing the coated paper liner as a paper bag also leverages the coated liner's environmentally sustainable properties, as it reduces the need for additional components to protect the food product. This approach addresses environmental concerns associated with conventional packaging solutions by reducing solid waste and enhancing recyclability.

In another aspect of the present invention, a method of manufacturing the coated paper liner comprises providing the paper sheet, applying to at least a portion of one or more of a first surface or a second surface of the paper sheet the first coating comprising the first polymeric composition to obtain a coated paper liner, and drying the coated paper liner wherein the obtained coated paper liner further comprises one or more of the flexibility agent and release agent, and wherein the second surface is a surface opposing the first surface of the paper sheet. In some embodiments, a method of manufacturing the coated paper liner comprises providing the paper sheet, applying to at least a portion of one or more of a first surface or a second surface of the paper sheet the first polymeric composition to obtain a coated paper liner, and drying the coated paper liner wherein the obtained coated paper liner further comprises the flexibility agent and wherein the second surface is a surface opposing the first surface of the paper sheet.

In other embodiments, the method includes applying the flexibility agent on one of the first surface or the second surface of the paper sheet after providing the paper sheet. In some embodiments, the method further comprises applying the flexibility agent to the coated paper liner. The flexibility agent may be applied on one of the first surface or the second surface of the paper sheet after providing the paper sheet and prior to applying the first coating.

In other embodiments, the flexibility agent and the first polymeric composition may be mixed prior to applying to the paper sheet so as to form a first mixed coating and applying the first mixed coating to at least a portion of the first surface or the second surface of the paper sheet that forms the first coating. By applying the first polymeric composition and flexibility agent together as a mixed coating, the process ensures uniformity of each component across the paper sheet. The process also simplifies manufacturing, reducing the overall number of steps leading to manufacturing cost savings without compromising the integrity of the components.

In other embodiments, the first coating including any one of the first polymeric composition or the second mixed coating may be applied to at least a portion of the first surface of the paper sheet to form the first coating and the flexibility agent is applied on the second, opposing surface of the paper sheet. In other embodiments, the first polymeric coating may be applied to at least a portion of the first surface of the paper sheet to form the first coating and the flexibility agent is applied on the second, opposing surface of the paper sheet.

By applying the flexibility agent and the first polymeric composition on the paper sheet separately, the method ensures that the paper sheet maintains a controlled balance between flexibility and heat-sealability. This process provides sufficient adhesion to form secure seals while also minimizing noise during handling of the paper liner.

In some embodiments, the release agent may be applied on at least a portion of a surface of the paper sheet. The release agent may be mixed with the first polymeric composition prior to applying to the paper sheet so as to form a second mixed coating, and applying the second mixed coating to at least a portion of the first surface or the second surface of the paper sheet. In some embodiments, the release agent may be mixed with the first polymeric composition and flexibility agent prior to applying to the paper sheet so as to form a third mixed coating, and applying the third mixed coating to at least a portion of the first surface or the second surface of the paper sheet.

By mixing the release agent with the first polymeric composition, or further with the flexibility agent to form respectively the second or third mixed coating, the process ensures uniformity of each component across the paper sheet, ensuring sufficient flexibility, heat-sealability, and durability. The process also simplifies manufacturing, reducing the overall number of steps leading to manufacturing cost savings without compromising the integrity of the components.

The release agent may be applied on the first coating, on portions of the paper sheet in which the first coating is absent, or both. The release agent may be applied to at least a portion of a surface of the paper sheet before or after applying the flexibility agent (when the flexibility agent is present).

This coating process enhances the coated paper liner's ability to effectively serve as both a release liner and packaging. Sequential coating may ensure more control over the coating process, leading to more accurate coating amounts of each component and reducing unnecessary material consumption. When the release agent is coated over both portions of the paper sheet comprising the first coating and portions in which the first coating is absent, the release agent can further protect against unintended adhesion between the consumer product and the coated paper liner.

In some embodiments, the method includes mixing the flexibility agent with pulp to form the paper sheet prior to providing the paper sheet. By mixing the flexibility agent with the pulp, the flexibility agent can be evenly distributed throughout the paper sheet, thereby ensuring desired flexibility and noise reduction throughout. This step can also prevent interaction of the flexibility agent with the first polymeric composition or release agent.

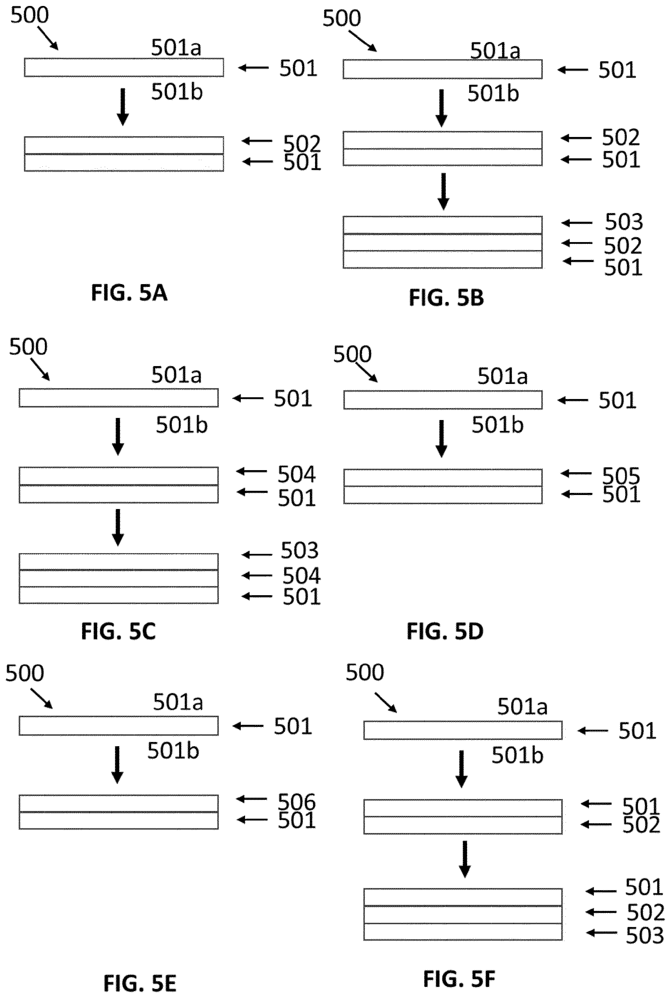

As shown in Fig. 5A-E, several embodiments of the coated paper liner and methods for manufacturing thereof are presented (500).

In some embodiments, as shown in Fig. 5A, the method comprises the steps of providing the paper sheet (501), applying to a first surface (501a) or a second surface (501b) of the paper sheet (501) the flexibility agent (not shown in the figure) and subsequently applying to the at least a portion of the same surface or at least a portion of the opposite surface (501a, 501b) of the paper sheet (501) the first polymeric composition to form the first coating (502), then drying the paper liner. In some embodiments, the first polymeric composition is applied to at least a portion of the first surface of the paper sheet and the flexibility agent is applied to the second, opposing surface of the paper sheet. Alternatively, the flexibility agent may be incorporated in the pulp prior to providing the paper sheet (501).

In some embodiments, the method further comprises coating the paper sheet by applying the release agent on at least a portion of a surface of the paper sheet to form the second coating. The second coating may be formed on the first coating, on a portion of the paper sheet in which the first coating is absent, or both. As shown in Fig. 5B, the method further comprises coating the first coating (502) with the second coating (503) prior to drying.

In other embodiments, as shown in Fig. 5C, the method (500) includes mixing the flexibility agent and the first polymeric composition to form a first mixed coating (504), then applying the first mixed coating to at least a portion of the first surface (501a) of the paper sheet, applying the second coating (503) comprising the release agent on the mixed coating (504), and drying the paper liner. The integration of the flexibility agent and the first polymeric composition in a single process step streamlines manufacturing, reducing production time and costs. Although not shown, the step of applying the second coating (503) comprising the release agent may be omitted from this method. Alternatively, although not shown, the step of applying the second coating comprising the release agent may include applying the second coating to at least a portion of the paper sheet in which the mixed coating is absent, or may include applying the second coating to at least a portion of the surface of the paper sheet in which the mixed coating is absent and to at least a portion of the surface of the paper sheet which comprises the first coating.

In still other embodiments, as shown in Fig. 5D, the method (500) includes mixing the release agent and the first polymeric composition to form a second mixed coating (505), the applying the second mixed coating to at least a portion of the first surface (501a) or the second surface (501b) of the paper sheet, and drying the paper liner. In such embodiments, the flexibility agent (not shown in the figure) may be applied to the at least a portion of the same surface or at least a portion of the opposite surface (501a, 501b) of the paper sheet (501) from the second mixed coating (505) or incorporated in the pulp prior to providing the paper sheet (501).

In still other embodiments, as shown in Fig. 5E, the method (500) includes mixing the release agent, the flexibility agent, and the polymeric composition to form the third mixed coating (506), the applying the third mixing coating to at least a portion of the first surface (501a) or the second surface (501b) of the paper sheet, and drying the paper liner.

In still other embodiments, as shown in Fig. 5F, the flexibility agent (not shown in the figure) may be applied to the first surface (501a) of the paper sheet (501) and the first coating (502) comprising the first polymeric composition is coated on at least a portion of the second surface (501b) of the paper sheet (501), opposite the first surface. The flexibility agent may be applied to the first surface (501a) before or after the first coating (502) is applied onto at least a portion of the second surface (501b). The second coating (503) comprising the release agent may be applied on at least a portion of the first coating (502), on at least a portion of the second surface of the paper sheet in which the first coating is absent, or both after the flexibility agent is applied or before the flexibility agent is applied. Although not shown, the step of applying the second coating (503) comprising the release agent may be omitted from this method or the first coating (502) may be substituted with the second mixed coating (505),

By applying the flexibility agent to a first surface (501a) and the first coating (502) comprising the first polymeric composition on at least a portion of a second (501b) opposing surface of the paper sheet (501), the method allows for distinct functional components to be applied separately, optimizing the performance of each component. This separation ensures that the flexibility agent can be absorbed effectively into the paper sheet (501), enhancing flexibility and reducing noise, while the first polymeric composition forms a robust first coating (502) on the opposite side, providing strong adhesion and barrier properties. This configuration supports the dual functionality of the liner as both a protective packaging and a release liner, ensuring that each layer performs its intended role without interference from the other.

By coating at least a portion of the paper sheet (501) with second coating (503) comprising the release agent prior to applying the flexibility agent, the method ensures that the release agent is well-anchored to the paper sheet (501), providing a consistent non-stick surface. This arrangement allows the release agent to form a robust barrier that enhances the release properties of the liner, ensuring that adhesive surfaces can be easily separated without tearing or sticking. This configuration supports the dual function of the liner as both a protective packaging and a release liner, simplifying the packaging process by eliminating the need for separate components.

Applying the second coating (503) comprising the release agent first also minimizes potential interactions between the release agent and the flexibility agent, which could otherwise compromise their individual properties. This approach enhances the overall reliability and effectiveness of the coated paper liner, ensuring it meets the required performance standards for packaging applications. Additionally, this method allows for a more efficient manufacturing process by facilitating the sequential application of coatings, potentially reducing production time and costs.

In some embodiments, the first coating (502) may be applied simultaneously with the application of the flexibility agent on opposing first (501a) and second surfaces (501b). This method of applying on opposing surfaces simultaneously also facilitates a more efficient manufacturing process by allowing simultaneous application of different components, potentially reducing production time and costs. Additionally, it minimizes the risk of interactions between the flexibility agent and the first polymeric composition, which could otherwise compromise their individual properties. This approach enhances the overall reliability and effectiveness of the coated paper liner, ensuring it meets the required performance standards for packaging applications.

After applying the flexibility agent, first coating, and, optionally, second coating on the paper sheet, the paper liner is dried at a temperature between 70-160°C, preferably 80-140°C, and more preferably 90-120°C. When applying the first mixed coating, or the second mixed coating, and optionally, second coating on the paper sheet, or when applying the third mixed coating on the paper sheet, the paper liner is dried at a temperature from 50 to 200°C, preferably from 50 to 180°C, and more preferably from 80 to 150°C. The method of drying the paper liner at a temperature as listed above prevents the loss of the flexibility agent, which could occur at higher temperatures while ensuring proper drying and the formation of the final (dried) coating layer which may not occur at lower temperatures. This controlled drying process ensures that the flexibility agent remains effective, enhancing the flexibility and noise reduction properties of the liner. By maintaining the integrity of the flexibility agent, the method contributes to the overall functionality and user experience of the product, ensuring discreet and effective use.

### Examples

### Example 1

A coated paper liner according to Example 1 is prepared by the following steps. Starkraft Release bleached MG Kraft paper (mixture of northern bleached kraft softwood and eucalyptus chemical pulp supplied by Zellstoff Pöls AG -Starkraft) having a grammage of 25 g/m² is provided as the paper sheet. A first mixed coating is prepared by mixing 70 weight % first polymeric composition and 30 weight % flexibility agent. A thermoplastic elastomer blend of ethylene vinyl acetate and ethylene ethyl acetate is used as the first polymeric composition and glycerin is used as the flexibility agent. The first mixed coating is applied in an amount of 4.1 g/m² to the paper sheet via a 3-roll coating process. The 3-roll coating process is conducted as follows. A gravure roller with a defined gravure shape and depth is used as the first roller. On this roller, a doctor blade is mounted to apply the mixed coating. A rubber-based application roller is used as the second roller which picks up the mixed coating from the gravure roller and transfers it to a web. The web is then pushed by a third roller against the application roller to complete the first coating. The coated paper liner is then dried at 160 degrees using an air flotation dryer.

### Example 2

A coated paper liner according to Example 2 is prepared in the same manner as in Example 1 except that the first mixed coating is applied in an amount of 3.2 g/m² to the paper sheet.

### Example 3

A coated paper liner according to Example 3 is prepared in the same manner as in Example 1 except a paper sheet having a grammage of 35 g/m² is provided and that the mixed coating is applied in an amount of 4.8 g/m² to the paper sheet.

### Example 4

A coated paper liner according to Example 4 is prepared in the same manner as in Example 3 except that the first mixed coating is prepared by mixing 50 weight% first polymeric composition and 50 weight % flexibility agent and is applied in an amount of 5.1 g/m² to the paper sheet. After drying the first mixed coating, the coated paper liner is coated with a silicone composition (addition-curing solventless silicone, Wacker (Dehesive 906, CRA 17, Crosslinker V24, catalyst C-05) comprising a silicon base polymer, controlled release additive, crosslinker, anchoring additive, and platinum catalyst in an amount of 1.0 g/m² to the paper sheet via a 5-roll coating process. The 5-roll coating process includes three steel and two rubber rollers running at different speeds to reduce the initial coating weight of the silicone composition based on the difference in roller surface speeds. The coated paper liner is then dried in a drying tunnel. The flatness of the coated paper liner may be altered to reach a desired flatness using the coating machine's humidifiers.

### Example 5

A coated paper liner according to Example 5 is prepared in the same manner as Example 1 except that a second mixed coating is prepared by mixing 80 weight % first polymeric composition (PVA) and 20 weight % of a silicone (addition-curing silicon emulsion (Elkem): SILIC EM922 + CROSSLK emulsion & CATALIZ. 909 de PT p/ EMULSION & Antiesp FC900 p/ emulsion ELK) and is applied in an amount of 3.0 g/m² to the paper sheet. The coated paper liner is then dried at 120°C using an air flotation dryer.

**[Table 1]**

| | Paper sheet grammage (g/m²) | First polymeric composition content (g/m²) | Flexibility agent content (g/m²) | Release agent content (g/m²) | Fmax (N) |
|---|---|---|---|---|---|
| Example 1 | 25 | 2.87 | 1.23 | N/A | 2.64 |
| Example 2 | 25 | 2.24 | 0.96 | N/A | 1.41 |
| Example 3 | 35 | 3.36 | 1.44 | N/A | 3.30 |
| Example 4 | 35 | 2.55 | 2.55 | 1.0 | 0.77 |
| Example 5 | 35 | 2.4 | N/A | 0.6 | 0.13 |

Persons skilled in the art will understand that the products and methods specifically described herein are non-limiting exemplary embodiments. The features illustrated or described in connection with one exemplary embodiment may be combined with the features of other embodiments. Various alternatives and modifications can be devised by those skilled in the art without departing from the disclosure. Accordingly, the present disclosure is intended to embrace all such alternatives, modifications and variances. As well, one skilled in the art will appreciate further features and advantages of the present disclosure based on the above-described embodiments. Accordingly, the present disclosure is not to be limited by what has been particularly shown and described, except as indicated by the appended claims.

Hereby, all issued patents, published patent applications, and non-patent publications that are mentioned in this specification are herein incorporated by reference in their entirety for all purposes, to the same extent as if each individual issued patent, published patent application, or non-patent publication were specifically and individually indicated to be incorporated by reference.

While several embodiments of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of presently disclosed embodiments. Thus the scope of the embodiments should be determined by the appended claims and their legal equivalents, rather than by the examples given.

Persons skilled in the art will understand that the devices and methods specifically described herein and illustrated in the accompanying drawings are non-limiting exemplary embodiments. The features illustrated or described in connection with one exemplary embodiment may be combined with the features of other embodiments. Various alternatives and modifications can be devised by those skilled in the art without departing from the disclosure. Accordingly, the present disclosure is intended to embrace all such alternatives, modifications and variances. As well, one skilled in the art will appreciate further features and advantages of the present disclosure based on the above-described embodiments. Accordingly, the present disclosure is not to be limited by what has been particularly shown and described, except as indicated by the appended claims.

## Claims

1. A coated paper liner comprising:
a first layer comprising a paper sheet layer;
a first coating comprising a first polymeric composition selected from the group consisting of a thermoplastic elastomer, a thermoplastic polymer, or combinations thereof that forms a film on at least a portion of a surface of the paper sheet layer; and
wherein the paper liner further comprises one or more additional component, being said one or more additional component selected from the group consisting of a flexibility agent and a release agent.

2. The coated paper liner of claim 1, wherein
the first polymeric composition is a thermoplastic elastomer dispersion, preferably the thermoplastic elastomer dispersion comprises a polymer selected from the group consisting of ethylene C₁₋₆ alkyl acrylate copolymer, ethylene C₁₋₆ alkyl acrylic acid copolymer, vinyl acetate-ethylene copolymer, ethylene vinyl acetate, polyvinyl acetate copolymer, polyethylene, and combination thereof; more preferably the thermoplastic elastomer dispersion comprises a blend of ethylene ethyl acrylate and ethylene vinyl acetate.

3. The coated paper liner of any of claims 1 or 2, wherein
the flexibility agent is selected from the group consisting of a polymeric gelling agent, an oily component, a surfactant, a polyol, and combinations thereof; preferably the flexibility agent is a polyol selected from a group consisting of glycerin, sorbitol, C₁₋₆ alkylene glycol, xylitol, and combination thereof, more preferably the polyol is glycerin.

4. The coated paper liner of any of claims 1 to 3, wherein
the release agent comprises a silicone selected from the group consisting of addition-curing solventless silicone, addition-curing silicone emulsion, UV-cured silicone, and solvent-based silicone.

5. The coated paper liner of any of claims 1 to 4, wherein
the paper sheet layer comprises the flexibility agent.

6. The coated paper liner of any of claims 1 to 5, wherein
the first coating comprises a first mixed coating of the first polymeric composition and the flexibility agent, wherein an amount of the first mixed coating is from 0.1 to 10 g per m² of the paper sheet, preferably from 2 to 7 g per m² of the paper sheet, more preferably from 3 to 5 g per m² of the paper sheet.

7. The coated paper liner of any of claims 1 to 6, wherein
the first polymeric composition and flexibility agent are in a weight ratio of from 50:50 to 95:5, preferably from 60:40 to 90:10, more preferably approximately 85:15.

8. The coated paper liner of claims 1 to 7, further comprising
a second coating comprising a release agent that forms a film on at least a portion of a surface of the paper sheet.

9. The coated paper liner of any of claims 1 to 5, wherein
the first coating comprises a second mixed coating of the first polymeric composition and the release agent,
wherein an amount of the second mixed coating is from 0.1 to 10 g/m², preferably from 0,6 to 7 g/m², more preferably from 3 to 5 g/m² of the paper sheet.

10. The coated paper liner of claim 9, wherein
the first polymeric composition and release agent are in a weight ratio of from 30:70 and 95:5, preferably between 70:30 and 85:15.

11. The coated paper liner of any of claims 1 to 4, wherein
the first coating comprises a third mixed coating of the first polymeric composition, the flexibility agent and the release agent,
wherein an amount of the third mixed coating is from 0.1 to 10 g/ m² of the paper sheet, preferably from 0,6 to 7 g/m², more preferably from 3 to 5 g/m².

12. The coated paper liner of claim 11, wherein
wherein the release agent is in a weight% from 5 to 70wt%, preferably from 15 to 30wt%, the first polymeric composition is in a weight% from 30 to 95 wt%, preferably from 40 to 60 wt% and the flexibility agent is in a weight% from 5 to 50 wt%, preferably from 20 to 30 wt%, based on 100 weight parts of the third mixed coating.

13. The coated paper liner of any of claims 1 to 12, wherein
the paper sheet has a grammage of from 10 to 120 g/m², preferably from 15 to 100 g/m², more preferably from 20 to 90 g/m².

14. The coated paper liner of any of claims 1 to 13, wherein
a heat-sealing force of the paper liner is equal to or greater than 0.01N.

15. Packaging comprising the coated paper liner of any of claims 1 to 14.
